(19) Europäisches Patentamt / European Patent Office / Office européen des brevets

(11) **EP 3 023 882 B1**

(12) **EUROPEAN PATENT SPECIFICATION**

(45) Date of publication and mention
of the grant of the patent:
**30.08.2017 Bulletin 2017/35**

(51) Int Cl.:
**G06F 17/14** (2006.01)     **G06F 17/18** (2006.01)
**G06F 17/30** (2006.01)     **G10L 25/54** (2013.01)
**G10L 25/48** (2013.01)     **G10L 25/18** (2013.01)

(21) Application number: **15195300.7**

(22) Date of filing: **19.11.2015**

(54) **Method and apparatus for generating fingerprint of an audio signal**

Verfahren und Vorrichtung zur Erzeugung des Fingerabdrucks eines Audiosignals

Procédé et appareil de génération d'empreinte digitale d'un signal audio

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2014 EP 14306854**

(43) Date of publication of application:
**25.05.2016 Bulletin 2016/21**

(73) Proprietor: **Thomson Licensing
92130 Issy-les-Moulineaux (FR)**

(72) Inventors:
• **DUONG, Quang Khanh Ngoc**
**35576 Cesson-Sévigné (FR)**
• **OZEROV, Alexey**
**35576 Cesson-Sévigné (FR)**
• **LEFEBVRE, Frédéric**
**35576 Cesson-Sévigné (FR)**

(74) Representative: **Huchet, Anne
TECHNICOLOR
1-5, rue Jeanne d'Arc
92130 Issy-les-Moulineaux (FR)**

(56) References cited:
**US-A1- 2005 177 372     US-A1- 2009 129 647**

• **REINHARD SONNLEITNER ET AL:
"QUAD-BASED AUDIO FINGERPRINTING
ROBUST TO TIME AND FREQUENCY SCALING",
PROC. OF THE 17 TH INT. CONFERENCE ON
DIGITAL AUDIO EFFECTS (DAFX-14), 1
September 2014 (2014-09-01), pages 1-8,
XP055193704, Erlangen, Germany**
• **SIX JOREN ET AL: "PANAKO -A SCALABLE
ACOUSTIC FINGERPRINTING SYSTEM
HANDLING TIME-SCALE AND PITCH
MODIFICATION", 15TH INTERNATIONAL
SOCIETY FOR MUSIC INFORMATION
RETRIEVAL CONFERENCE (ISMIR 2014), 27
October 2014 (2014-10-27), pages 259-264,
XP055193706,**
• **BILEI ZHU ET AL: "A novel audio fingerprinting
method robust to time scale modification and
pitch shifting", PROCEEDINGS OF THE
INTERNATIONAL CONFERENCE ON
MULTIMEDIA, MM '10, 1 January 2010
(2010-01-01), page 987, XP055049351, New York,
New York, USA DOI: 10.1145/1873951.1874130
ISBN: 978-1-60-558933-6**
• **Dan Stowell ET AL: "Birdsong and C4DM: A
survey of UK birdsong and machine recognition
for music researchers", , 28 July 2011
(2011-07-28), pages 1-23, XP055193735,
Retrieved from the Internet:
URL:http://citeseerx.ist.psu.edu/viewdoc/d
ownload?doi=10.1.1.308.395&rep=rep1&type=p
df [retrieved on 2015-06-04]**

EP 3 023 882 B1

## Description

## TECHNICAL FIELD

The present disclosure relates to the digital audio technology, and in particular to a method and an apparatus for generating a fingerprint of an audio signal.

## BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Audio fingerprinting technique can match distorted unlabeled audio snippets to corresponding labeled data. It has wide range of applications in digital audio technologies, such as audio classification, audio retrieval and content synchronization. As an example, a reference written by A. Wang, "An industrial-strength audio search algorithm", Proc. ISMIR 2003 (hereinafter referred to as reference 1) discusses an audio retrieval system, by which a person who is listening to a music (live, or on radio,...) and wants to know more about the singer, name of song, album of the music can simply record a short audio signal and uses it as a query to retrieve metadata information. Another example for the content synchronization is described in a reference written by N. Q. K Duong, C Howson, and Y Legallais, "Fast second screen TV synchronization combining audio fingerprint technique and generalized cross correlation," IEEE International Conference in Consumer Electronics-Berlin (ICCE-Berlin), 2012 (hereinafter referred to as reference 2), where an audio fingerprint can assure fast and accurate synchronization of media components streamed over different networks to different rendering devices for the implementation of emerging second screen TV applications.

There are some known solutions for generating fingerprint in the art. In a reference written by Pedro Cano et al, "a review of audio fingerprinting", Journal of VLSI Signal Processing 41, 271-284, 2005 (hereinafter referred to as reference 3), several fingerprinting technologies were introduced. According to the reference 3, basically an audio signal will be subject to a preprocessing, a framing & overlap, a transform, a feature extract and a post-processing by a front end block and then the output is subject to a fingerprint modeling block to generate a fingerprint of the audio signal.

The above mentioned reference 1 also discusses the generation of an audio fingerprint. In the approach of the reference 1, locations of pairs of energy peaks in the audio spectrogram (i.e. the time-frequency representation of an audio signal) are encoded as fingerprint. In a reference written by J. Haitsma and T. Kalker, "A highly robust audio fingerprinting system", Proc. ISMIR 2002 (hereinafter referred to as reference 4), energy differences between neighboring time-frequency point in the spectrogram are bit-quantized to generate signature.

Some known fingerprint approaches considered spectrogram as an image and applied computer vision techniques to this spectral image for designing fingerprint. For examples, a reference written by S. Baluja and M. Covell, "Waveprint: Efficient wavelet-based audio fingerprinting," Patent recognition, 2008 (hereinafter referred to as reference 5) proposes to apply wavelet transform to the spectral images and designed Min-Hash signature based on sign of the top wavelet coefficients. In the algorithm provided by a reference written by K. Behun, "Image features in music style recognition", Proc. CESCG 2013 (hereinafter referred to as reference 6), the image based feature SIFT is computed and the histogram of SIFT (a.k.a. the bag-of-word (BoW) feature) is taken as signature. A reference written by M. Riley et al., "A text retrieval approach to content-based audio", Proc. ISMIR 2008 (hereinafter referred to as reference 7) provides an algorithm to use Bag-of-Audio-Word (BoA) for content-based audio retrieval. A reference written by S. Pancoast and M. Akbacak, "Bag-of-Audio-Words Approach for Multimedia Event Classification," Proc. Interspeech 2012 (hereinafter referred to as reference 8) proposes to use BoA for audio event classification.

However, most of the above known fingerprint solutions are not able to deal with the big time stretching (which for example happens in the process of changing speed or duration of an audio signal to fit the time in a TV or radio program) and the pitch variation (which happens for example in live concert, covered song) although they are robust against noise and distortions (such as A/D conversion, compression). Thus, the known solutions are not robust to some more challenging applications, such as in recognizing songs in live concert, where the recorded audio query is not exactly a distorted version of the original signal in the database (too much variation either time or frequency scale).

Therefore, there is a need for a method and an apparatus for generating a fingerprint of an audio signal, which is robust to time stretching and pitch variation in audio applications.

Below are some prior art disclosed in the European search report.

D1 REINHARD SONNLEITNER ET AL: "QUAD-BASED AUDIO FINGERPRINTING ROBUST TO TIME AND FREQUENCY SCALING", PROC. OF THE 17 TH INT. CONFERENCE ON DIGITAL AUDIO EFFECTS (DAFX-14), 1 September 2014 (2014-09-01), pages 1-8, XP055193704, Erlangen, Germany. It is directed to audio fingerprinting being robust to time and frequency scaling. The fingerprint is constructed based on the peaks of STFT magnitude spectrogram compute from the audio signal.

D2 SIX JOREN ET AL: "PANAKO - A SCALABLE ACOUSTIC FINGERPRINTING SYSTEM HANDLING TIME-SCALE AND PITCH MODIFICATION", 15 TH INTERNATIONAL SOCIETY FOR MUSIC INFORMATION RETRIEVAL CONFERENCE (ISMIR 2014). 27 October 2014 (2014-10-27), pages 259-264, XP055193706. It constructs fingerprints based on the peaks of a time frequency representation, peak triplets are used.

D3 US 2005/177372 A1 (WANG AVERY L[US] ET AL WANG AVERY LI- CHUN [US] ET AL) 11 August 2005 (2005-08-11). It constructs fingerprints based on the peaks of a spectrogram, the susceptibility to adaptation in different situations is achieved by introducing variant and invariant fingerprint components.

D4 BILEI ZHU ET AL: "A novel audio fingerprinting method robust to time scale modification and pitch shifting", PROCEDDINGS OF THE INTERNATIONAL CONFERENCE ON MULTIMEDIA, MM '10, 1 January 2010 (2010-01-01), page 987, XP055049351, New York, New York, USA DOL: 10.1145/1873951.1874130 ISBN: 978-1-60-558933-6. It uses SIFT features of the spectrogram.

D5 US 2009/129647 A1 (DIMITROVA NEVENKA [US] ET AL DIMIROVA NEVENKA [US] ET AL) 21 May 2009 (2009-05-21). It is directed to identification of repetitive DNA patterns.

D6 Dan Stowell ET AL: "Birdsong and C4DM: A survey of UK birdsong and machine recognition for music researchers", 28 July 2011 (2011 -07-28), pages 1023, XP055193735. It uses histograms.

## SUMMARY

The present invention disclosure is provided to solve at least one problem of the prior art. The present disclosure will be described in detail with reference to exemplary embodiments. However, the present disclosure is not limited to the exemplary embodiments.

According to a first aspect of the present invention disclosure, there is provided a method for generating a fingerprint of an audio signal. The method comprises detecting peaks in a representation of a temporal spectrum of frequencies of the audio signal, a peak being defined as a point in the representation which has a higher

According to a second aspect of the present invention disclosure, there is provided an apparatus for generating a fingerprint of an audio signal. The apparatus comprises a time-frequency representing unit for obtaining a representation of the temporal spectrum of frequencies in the audio signal; a peak detecting unit for detecting peaks in the representation of the audio signal, a peak being defined as a point in the representation which has a higher energy than its neighboring points; a first calculating unit for obtaining a distribution of the positions of the detected peaks along a frequency axis; a second calculating unit for obtaining a distribution of positions of the detected peaks along a time axis; and a combining unit for combining the distribution of positions from the first calculating unit and the second calculating unit to generate the fingerprint of the audio signal.

In an embodiment, the time-frequency representing unit is adapted to segment the audio signal into overlapping time frames; and transform the segmented audio signal from time domain to time-frequency domain to generate a spectrogram of the audio signal comprising linearly-spaced frequencies.

In an embodiment, the time-frequency representing unit is further adapted to map the linearly-spaced frequencies of the spectrogram into P bands of an auditory-motivated frequency scale.

In an embodiment, the first calculating unit generates a vector of integer numbers $V_f=[V_{f1},...,V_{fF}]^T$ representing the distribution of positions of the detected peaks along the frequency axis as a function of the number of peaks appearing at each frequency bin, wherein a parameter F is the number of frequency bins and T denote vector transpose; and the second calculating unit generates a vector of integer numbers $Vt=[V_{t1},...,V_{tN}]^T$ to represent the distribution of positions of the detected peaks along the time axis as a function of the number of peaks appearing at each time frame bin, where a parameter N is the number of time frame bins.

In an embodiment, the combining unit combines the distribution of positions by a concatenation of the vector $V_f=[V_{f1},...,V_{fF}]^T$ and the vector $Vt=[V_{t1},...,V_{tN}]^T$ according to the equation below:

$$V=[a*V_f; b*V_t],$$

wherein a and b are constants.

According to a third aspect of the present disclosure, there is provided a computer program product downloadable from a communication network and/or recorded on a medium readable by computer and/or executable by a processor, comprising program code instructions for implementing the steps of a method according to the first aspect of the disclosure.

According to a fourth aspect of the present disclosure, there is provided a non-transitory computer-readable medium comprising a computer program product recorded thereon and capable of being run by a processor, including program code instructions for implementing the steps of a method according to the first aspect of the disclosure.

## BRIEF DESCRIPTION OF THE DRAWINGS

The above and other objects, features, and advantages of the present disclosure will become apparent from the following descriptions on embodiments of the present disclosure with reference to the drawings, in which:

Figure 1 is a flowchart of a method for generating a fingerprint of an audio signal according to an embodiment of the present disclosure;

Figure 2 is a flowchart of a process for obtaining a spectrogram of the audio signal according to an embodiment of the present disclosure;

Figures 3(a)-3(f) are exemplary diagrams showing the objects resulting from the workflow of the generation of a fingerprint of an audio signal according to an embodiment of the present disclosure;

Figure 4 is a block diagram of an apparatus for generating a fingerprint of an audio signal according to an embodiment of the present disclosure; and

Figure 5 is illustrates an audio retrieval system which can use the fingerprint generated according to the embodiment of the disclosure for retrieving an audio signal.

## DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

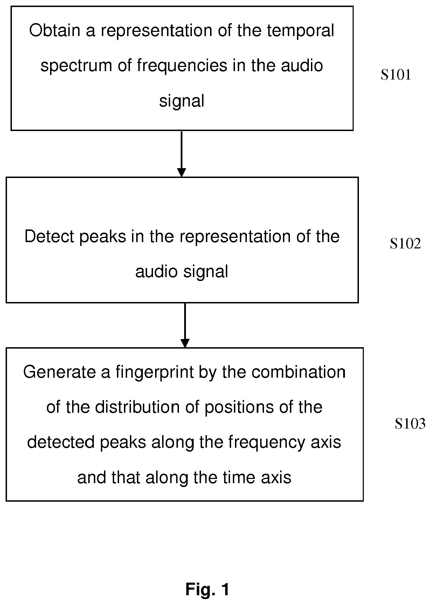

Figure 1 is a flowchart of a method for generating a fingerprint of an audio signal according to an embodiment of the present disclosure.

At step S101, it obtains a representation of a temporal spectrum of frequencies in the audio signal.

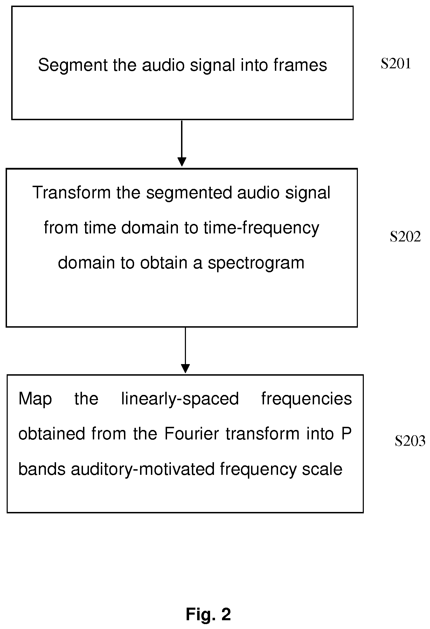

It can be appreciated that the representation can be called the spectrogram of the audio signal, which is a visual representation of the spectrum of frequencies in the audio signal varying with time. The spectrogram is actually the time-frequency representation of the audio signal which is normally viewed as a 2D image. In this case, normally the horizontal axis of the spectrogram represents time, and the vertical axis is frequency. There are known ways in the art to obtain the spectrogram of the audio signal, which can be used in the step S101. Hereinafter, a process for obtaining a spectrogram of the audio signal will be described with reference to Figure 2.

Figure 2 is a flowchart of a process for obtaining a spectrogram of the audio signal according to an embodiment of the present disclosure.

As shown in Figure 2, at step 201, it segments the audio signal into frames.

At step S202, it transforms the segmented audio signal from frequency domain to time-frequency domain to obtain a spectrogram of the audio signal.

The above steps S201 and S202 are for transforming the time domain audio signal into time-frequency domain representation known as spectrogram. In the step S202, a Fourier transform can be used for the transform. In this case, the steps S201 and S202 can be called a short time Fourier transform (STFT). The spectrogram obtained by the STFT comprises linearly-spaced frequencies varying with time. That is, the horizontal axis of the spectrogram is time, and the vertical axis represents linearly-spaced frequencies of the audio signal. The STFT is well-known in the art. No further details will be given in this respect.

As shown in Figure 2, the process for obtaining a spectrogram of the audio signal can further comprise a step S203, where it maps the linearly-spaced frequencies obtained from the STFT into P bands of an auditory-motivated frequency scale. The frequency scale can be Bark, Mel, log scale, or equivalent rectangular bandwidth (ERB) scale. These auditory-motivated frequency scales usually provide finer spectral resolution than the STFT at low frequencies and lower spectral resolution than STFT at high frequencies. Typically P=32, 64,...

The auditory-motivated frequency scales mentioned in the step S203 are well-known in the art. No further details will be given in this respect.

Back to Figure 1, at the next step S102, it detects peaks in the representation, the spectrogram in this case, of the audio signal. Here, a peak is defined as a point in the spectrogram which has a higher energy than its neighboring points in a certain range. In this embodiment, it can be appreciated that the energy is defined as the square magnitude of the STFT coefficient used for the transform.

As an example, it can detect peaks in the spectrogram, which are points having higher energy than its neighboring points. Please note that the detection of peaks in a spectrogram of an audio signal is known in the art. For example, the reference 1

As shown in Figure 2, at step 201, it segments the audio signal into frames.

At step S202, it transforms the segmented audio signal from time domain to time-frequency domain to obtain a spectrogram of the audio signal.

The above steps S201 and S202 are for transforming the time domain audio signal into time-frequency domain representation known as spectrogram. In the step S202, a Fourier transform can be used for the transform. In this case, the steps S201 and S202 can be called a short time Fourier transform (STFT). The spectrogram obtained by the STFT comprises linearly-spaced frequencies varying with time. That is, the horizontal axis of the spectrogram is time, and the vertical axis represents linearly-spaced frequencies of the audio signal. The STFT is well-known in the art. No further details will be given in this respect.

As shown in Figure 2, the process for obtaining a spectrogram of the audio signal can further comprise a step S203, where it maps the linearly-spaced frequencies obtained from the STFT into P bands of an auditory-motivated frequency scale. The frequency scale can be Bark, Mel, log scale, or equivalent rectangular bandwidth (ERB) scale. These auditory-motivated frequency scales usually provide finer spectral resolution than the STFT at low frequencies and lower spectral resolution than STFT at high frequencies. Typically P=32, 64,...

The auditory-motivated frequency scales mentioned in the step S203 are well-known in the art. No further details will be given in this respect.

Back to Figure 1, at the next step S102, it detects peaks in the representation, the spectrogram in this case, of the audio signal. Here, a peak is defined as a point in the spectrogram which has a higher energy than its neighboring points in a certain range. In this embodiment, it can be appreciated that the energy is defined as the square magnitude of the STFT coefficient used for the transform.

As an example, it can detect peaks in the spectrogram, which are points having higher energy than its neighboring points. Please note that the detection of peaks in scale distortion, Vf is advantageously used instead of Vt, and the smaller value of F, the more compact fingerprint is. Thus the fingerprint of the audio signal can be generated by a fu of the histogram along frequency axis and that along time axis of positions of the detected peaks. For example, the combination of both histograms can be built as below

$$V=[a*V_f;\ b*V_t] \qquad (1)$$

In this example, the generated fingerprint is the concatenation of $V_f$ and Vt , which resulting in (F+N)-dimensional vector of integers. Note that the constant a and b in the equation (1) allow tuning the contribution (weight) between the two histogram in the final fingerprint signature. In applications where there is no scale shifting or the scale shifting is very small, it can set a=0 so as to reduce the fingerprint size, make the signature very robust to pitch variation, and fasten the matching process. Similarly, in applications where the frequency shifting is not concerned, it can set b=0 so that the signature is very robust to time stretch.

In an embodiment of the disclosure, a weighting scheme can be built for different peak locations, for example, based on prior knowledge about the important regions. In general case, one can set a=b=1, the number of frequency bins can be in the order of 128 (auditory-motivated scale), and the number of time frames N can be in the order of 100. Another way to balance the contribution of Vf and Vt is to set a=N/(F+N) and b=F/(N+F). For example, in case the query length is 4 seconds, the frameshift in the short time Fourier transform (STFT) is 20 ms.

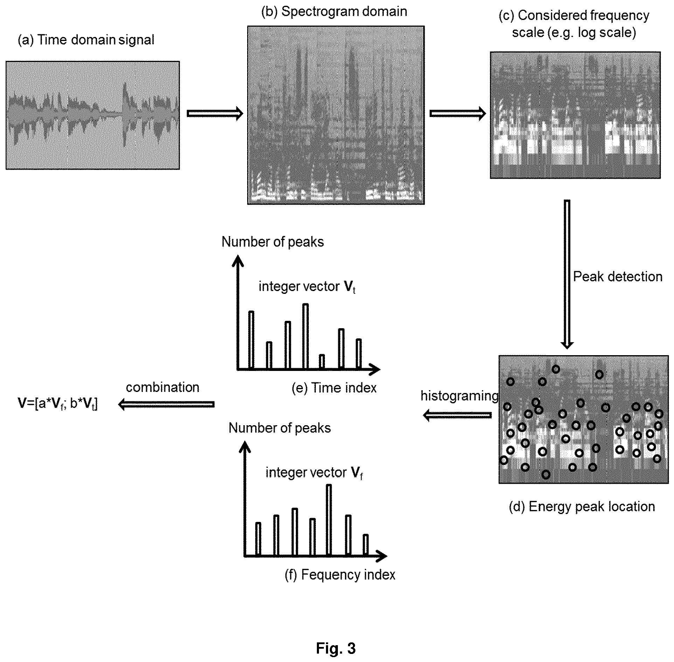

Figures 3(a)-3(f) are exemplary diagrams showing the objects resulting from the workflow of the generation of a fingerprint of an audio signal according to an embodiment of the present disclosure.

Figure 3(a) shows an audio signal in time domain. Figure 3(b) shows the spectrogram of the audio signal, which is obtained for example by the above-described steps S201 and S202. Figure 3(c) illustrates the spectrogram after mapping the linearly-spaced frequencies obtained from the STFT into P bands auditory-motivated frequency scale.

Figure 3(d) is an exemplary diagram showing the detected peaks in the spectrogram of the audio signal.

Figure 3(e) illustrates an example of histogram of the positions of the detected peaks along the time axis, which is obtained by counting the number of peaks appearing at each time frame bin. The output is a vector of integer numbers Vt.

Figure 3(f) illustrates an example of histogram of the positions of the detected peaks along the frequency axis, which is obtained by counting the number of peaks appearing at each frequency bin. The output is a vector of integer numbers $V_f$. Finally as shown in Figure 3(f), a fingerprint of the audio signal can be generated by the concatenation of $V_f$ and Vt. The generated fingerprint is represented by $V=[a*V_f;\ b*V_t]$.

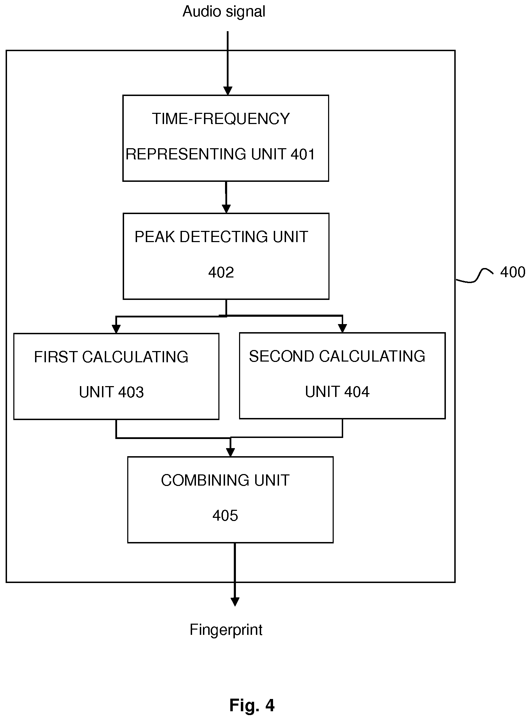

Figure 4 is a block diagram of an apparatus for generating a fingerprint of an audio signal according to an embodiment of the present disclosure.

As shown in Figure 4, the input of the apparatus 400 is an audio signal.

The apparatus 400 comprises a time-frequency representing unit 401 for obtaining a representation of the spectrum of frequencies in the audio signal varying with time. A spectrogram of the audio signal can be obtained according to the process described above.

The apparatus 400 further comprises a peak detecting unit 402 for detecting peaks in the representation of the audio signal.

The apparatus 400 further comprises a first calculating unit 403 for obtaining the distribution of the positions of the detected peaks along the frequency axis. As described above, the distribution can be represented by a histogram, which can be obtained by counting the number of peaks appearing at each frequency bin.

The apparatus 400 further comprises a second calculating unit 404 for obtaining the distribution of positions of the detected peaks along the time axis. As described above, the distribution can be represented by a histogram, which can be obtained by counting the number of peaks appearing at each time frame bin.

The apparatus 400 further comprises a combining unit 405 for combining the histograms from the first calculating unit 403 and the second calculating unit 404 to generate the fingerprint of the audio signal. The combination can be the concatenation of both histograms, which resulting in a vector of integers as the fingerprint of the audio signal.

The output of the apparatus 400 is a fingerprint of the audio signal. As described above, in an embodiment, it is a vector of integers.

According to the embodiments of the present disclosure, the peak locations, which are coordinates of peaks in time and frequency axes of the spectral image representation, are very robust to background noise due to the fact that background noise can only change the energy level in most cases, instead of the position of the local maximum energy point.

The fingerprint generated according to the embodiments of the disclosure is a vector of integer number. It can be applied to the application of similarity search, exhaustive search or Approximate Nearest Neighbor (ANN) search such as LSH, Hamming embedding, product quantization (PQ) code.

The fingerprint according to the embodiments of the disclosure is not only robust to many types of noise, but also robust against time scale modification and frequency shifting. The fingerprint is compact and therefore applicative for large-scale search. It therefore can bring wide range of applications in both audio retrieval and content synchronization.

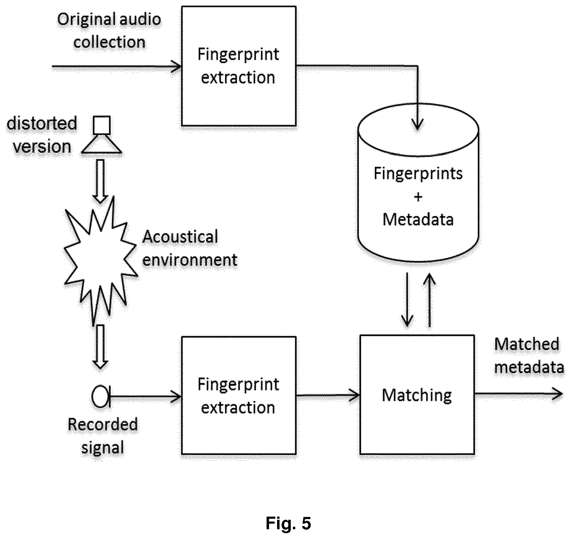

Figure 5 is illustrates an audio retrieval system which can use the fingerprint generated according to the embodiment of the disclosure for retrieving an audio signal.

As shown in Figure 5, the audio retrieval contains two major parts, one is fingerprint extraction and the other is fingerprint matching. In the fingerprint extraction, a fingerprint is extracted upon a query, for example, from a recorded signal. The fingerprint matching will compare the extracted fingerprint with a fingerprint of an available signal, for example, the original audio collection. The fingerprint of the available signal can be pre-computed and indexed in a database, as similarity search, for retrieval purpose. Detailed information of the matching and retrieval process will not be provided in the disclosure. It only needs to mention here that a robust and compact audio signature associated to each piece (segment) of audio signal is important for purpose of audio signal retrieval.

As described above, the fingerprint generated according to the embodiment of the disclosure is robust to time stretching and pitch variation in audio applications. In the known arts introduced in the background part, features used in the fingerprint of the reference 1 is robust to the background noise while the resulted fingerprint is not able to deal with the big time stretching and the pitch variation. The bag-of-word (BoW) feature used in the fingerprint of the references 6 and 7 can bring some benefits to those major distortions such as either time scale modification and or pitch shifting. The audio fingerprint according to the embodiment of the disclosure is proposed considering both features discussed in the references 1 and 6, 7. Therefore, the proposed fingerprint can be used in more challenging applications such as in recognizing songs in live concert where the recorded audio query is not exactly a distorted version of the original signal in the database (too much variation either time or frequency scale). In addition, since the fingerprint is a vector of integer numbers, it is very easily integrated to any search well-established engine.

It is to be understood that the present disclosure may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

The present disclosure is described above with reference to the embodiments thereof. However, those embodiments are provided just for illustrative purpose, rather than limiting the present disclosure. The scope of the disclosure is defined by the attached claims.

**Claims**

1. A method for generating a fingerprint of an audio signal, comprising:

   detecting (S102) peaks in a representation of a temporal spectrum of frequencies of the audio signal (S101), a peak being defined as a point in the representation which has a higher energy than its neighboring points; and **characterized by** further comprising
   generating (S103) the fingerprint of the audio signal as a function of a distribution of positions of the detected peaks along a frequency axis and a distribution of positions of the detected peaks along a time axis.

2. The method according to claim 1, wherein the obtaining of the representation of the spectrum of frequencies in the audio signal comprises:

   segmenting (S201) the audio signal into overlapping time frames; and
   transforming (S202) the segmented audio signal from a time domain to a time-frequency domain to generate a spectrogram of the audio signal comprising linearly-spaced frequencies.

**3.** The method according to claim 2, further comprising:

mapping (S203) the linearly-spaced frequencies of the spectrogram into P bands of an auditory-motivated frequency scale.

**4.** The method according to claim 1, wherein
the distribution of positions of the detected peaks along the frequency axis is represented by a vector of integer numbers $V_f=[V_{f1},...,V_{fF}]^T$ as a function of the number of peaks appearing at each frequency bin, wherein a parameter F is the number of frequency bins and T denote vector transpose; and
the distribution of positions of the detected peaks along the time axis is represented by a vector of integer numbers $Vt=[V_{t1},...,V_{tN}]^T$ as a function of the number of peaks appearing at each time frame bin, where a parameter N is the number of time frame bins.

**5.** The method according to claim 4, wherein the function is a concatenation of the vector $V_f=[V_{f1},...,V_{fF}]^T$ and the vector $V_t=[V_{t1},...,V_{tN}]^T$ according to the equation below:

$$\mathbf{V}=[a*\mathbf{V}_f;\ b*\mathbf{V}_t]$$

wherein a and b are constants.

**6.** The method according to claim 4, further comprising adapting the parameters F and N according to a requirement on compactness and robustness of the fingerprint.

**7.** The method according to claim 5, further comprising adapting the constants a and b according to a requirement on robustness to either frequency shifting or time scale shifting of the fingerprint.

**8.** The method according to claim 2, wherein the segmented audio signal is transformed by a Fourier transform.

**9.** An apparatus (400) for generating a fingerprint of an audio signal, comprising:

a time-frequency representing unit (401) for obtaining a representation of the temporal spectrum of frequencies in the audio signal;
a peak detecting unit (402) for detecting peaks in the representation of the audio signal, a peak being defined as a point in the representation which has a higher energy than its neighboring points;
and **characterized by** further comprising

a first calculating unit (403) for obtaining a distribution of the positions of the detected peaks along a frequency axis;
a second calculating unit (404) for obtaining a distribution of positions of the detected peaks along a time axis; and
a combining unit (405) for combining the distribution of positions from the first calculating unit (403) and the second calculating unit (404) to generate the fingerprint of the audio signal.

**10.** The apparatus (400) according to claim 9, wherein the time-frequency representing unit (401) is adapted to:

segment the audio signal into overlapping time frames; and
transform the segmented audio signal from time domain to time-frequency domain to generate a spectrogram of the audio signal comprising linearly-spaced frequencies.

**11.** The apparatus (400) according to claim 10, wherein the time-frequency representing unit (401) is further adapted to:

map the linearly-spaced frequencies of the spectrogram into P bands of an auditory-motivated frequency scale.

**12.** The apparatus (400) according to claim 9, wherein the first calculating unit (403) generates a vector of integer numbers $V_f=[V_{f1},...,V_{fF}]^T$ representing the distribution of positions of the detected peaks along the frequency axis as a function of the number of peaks appearing at each frequency bin, wherein a parameter F is the number of frequency bins and T denote vector transpose; and
the second calculating unit (404) generates a vector of integer numbers $Vt=[V_{t1},...,V_{tN}]^T$ representing the distribution of positions of the detected peaks along the time axis as a function of the number of peaks appearing at each time frame bin, where a parameter N is the number of time frame bins.

**13.** The apparatus (400) according to claim 12, wherein. wherein the combining unit (405) combines the distribution of positions by a concatenation of the vector $V_f=[V_{f1},...,V_{fF}]^T$ and the vector $Vt=[V_{t1},...,V_{tN}]^T$ according to the equation below:

$$\mathbf{V}=[a*\mathbf{V}_f;\ b*\mathbf{V}_t]$$

wherein a and b are constants.

14. Computer program comprising program code instructions executable by a processor for implementing the steps of a method according to at least one of claims 1 to 8.

15. Computer program product which is stored on a non-transitory computer readable medium and comprises program code instructions executable by a processor for implementing the steps of a method according to at least one of claims 1 to 8.

**Patentansprüche**

1. Verfahren zum Erzeugen eines Fingerabdrucks eines Audiosignals, wobei das Verfahren umfasst:

Detektieren (S102) von Spitzen in einer Darstellung eines zeitlichen Spektrums von Frequenzen des Audiosignals (S101), wobei eine Spitze als ein Punkt in der Darstellung definiert ist, der eine höhere Energie als seine Nachbarpunkte besitzt; und **dadurch gekennzeichnet, dass** das Verfahren ferner umfasst:

Erzeugen (S103) des Fingerabdrucks des Audiosignals als eine Funktion einer Verteilung der Positionen der detektierten Spitzen entlang einer Frequenzachse und einer Verteilung von Positionen der detektierten Spitzen entlang einer Zeitachse.

2. Verfahren nach Anspruch 1, wobei das Erhalten der Darstellung des Spektrums von Frequenzen in dem Audiosignal umfasst:

Segmentieren (S201) des Audiosignals in überlappende Zeitrahmen; und
Transformieren (S202) des segmentierten Audiosignals aus einem Zeitbereich in einen Zeit-Frequenz-Bereich, um ein Spektrogramm des Audiosignals zu erzeugen, das linear beabstandete Frequenzen umfasst.

3. Verfahren nach Anspruch 2, das ferner umfasst:

Abbilden (S203) der linear beabstandeten Frequenzen des Spektrogramms in P Bänder einer durch Hören motivierten Frequenzskale.

4. Verfahren nach Anspruch 1, wobei
die Verteilung der Positionen der detektierten Spitzen entlang der Frequenzachse durch einen Vektor ganzer Zahlen $V_f = [V_{f1}, ..., V_{fF}]^T$ als eine Funktion der Anzahl der in jedem Frequenzintervallbereich auftretenden Spitzen dargestellt wird, wobei ein Parameter F die Anzahl der Frequenzintervallbereiche ist und T eine Vektortransposition bezeichnet; und die Verteilung der Positionen der detektierten Spitzen entlang der Zeitachse durch einen Vektor ganzer Zahlen $Vt = [V_{t1}, ..., V_{tN}]^T$ als eine Funktion der Anzahl der in jedem Zeitrahmen-Intervallbereich auftretenden Spitzen dargestellt wird, wobei ein Parameter N die Anzahl der Zeitrahmen-Intervallbereiche ist.

5. Verfahren nach Anspruch 4, wobei die Funktion eine Verkettung des Vektors $V_f = [V_{f1}, ..., V_{fF}]^T$ und des Vektors $Vt = [V_{t1}, ..., V_{tN}]^T$ in Übereinstimmung mit der folgenden Gleichung ist:

$$\mathbf{V} = [a \cdot \mathbf{V}_f; \; b \cdot \mathbf{V}_t],$$

wobei a und b Konstanten sind.

6. Verfahren nach Anspruch 4, das ferner das Anpassen der Parameter F und N in Übereinstimmung mit einer Anforderung an die Kompaktheit und Robustheit des Fingerabdrucks umfasst.

7. Verfahren nach Anspruch 5, das ferner das Anpassen der Konstanten a und b in Übereinstimmung mit einer Anforderung an die Robustheit entweder gegenüber Frequenzverschiebung oder gegenüber Zeitskalenverschiebung des Fingerabdrucks umfasst.

8. Verfahren nach Anspruch 2, wobei das segmentierte Audiosignal durch eine Fourier-Transformation transformiert wird.

9. Vorrichtung (400) zum Erzeugen eines Fingerabdrucks eines Audiosignals, wobei die Vorrichtung umfasst:

eine Zeit-Frequenz-Darstellungseinheit (401), um eine Darstellung des zeitlichen Spektrums der Frequenzen in dem Audiosignal zu erhalten; eine Spitzendetektionseinheit (402) zum Detektieren von Spitzen in der Darstellung des Audiosignals, wobei eine Spitze als ein Punkt in der Darstellung definiert ist, der eine höhere Energie als seine Nachbarpunkte besitzt, und **dadurch gekennzeichnet, dass** die Vorrichtung ferner umfasst:

eine erste Berechnungseinheit (403) zum Erhalten einer Verteilung der Positionen der detektierten Spitzen entlang einer Frequenzachse; eine zweite Berechnungseinheit (404) zum Erhalten einer Verteilung der Positionen der detektierten Spitzen entlang einer Zeitachse; und

eine Kombinationseinheit (405) zum Kombinieren der Verteilung der Positionen von der ersten Berechnungseinheit (403) und von der zweiten Berechnungseinheit (404), um den Fingerabdruck des Audiosignals zu erzeugen.

10. Vorrichtung (400) nach Anspruch 9, wobei die Zeit-Frequenz-Darstellungseinheit (401) ausgelegt ist zum:

Segmentieren des Audiosignals in überlappende Zeitrahmen; und
Transformieren des segmentierten Audiosignals aus dem Zeitbereich in den Zeit-Frequenz-Bereich, um ein Spektrogramm des Audiosignals zu erzeugen, das linear beabstandete Frequenzen umfasst.

11. Vorrichtung (400) nach Anspruch 10, wobei die Zeit-Frequenz-Darstellungseinheit (401) ferner ausgelegt ist zum: Abbilden der linear beabstandeten Frequenzen des Spektrogramms in P Bänder einer durch Hören motivierten Frequenzskale.

12. Vorrichtung (400) nach Anspruch 9, wobei die erste Berechnungseinheit (403) einen Vektor ganzer Zahlen $V_f = [V_{f1}, ..., V_{fF}]^T$ erzeugt, der die Verteilung der Positionen der detektierten Spitzen entlang der Frequenzachse als eine Funktion der Anzahl der in jedem Frequenzintervallbereich auftretenden Spitzen darstellt, wobei ein Parameter F die Anzahl der Frequenzintervallbereiche ist und T eine Vektortransposition bezeichnet; und die zweite Berechnungseinheit (404) einen Vektor ganzer Zahlen $Vt = [V_{t1}, ..., V_{tN}]^T$ erzeugt, der die Verteilung der Positionen der detektierten Spitzen entlang der Zeitachse als eine Funktion der Anzahl der in jedem Zeitrahmen-Intervallbereich auftretenden Spitzen darstellt, wobei ein Parameter N die Anzahl der Zeitrahmen-Intervallbereiche ist.

13. Vorrichtung (400) nach Anspruch 12, wobei die Kombinationseinheit (405) die Verteilung der Positionen durch eine Verkettung des Vektors $V_f = [V_{f1}, ..., V_{fF}]^T$ und des Vektors $Vt = [V_{t1}, ..., V_{tN}]^T$ in Übereinstimmung mit der folgenden Gleichung kombiniert:

$$\mathbf{V} = [a \cdot \mathbf{V}_f; \; b \cdot \mathbf{V}_t],$$

wobei a und b Konstanten sind.

14. Computerprogrammprodukt, das Programmcodeanweisungen umfasst, die durch einen Prozessor ausgeführt werden können, um die Schritte eines Verfahrens nach mindestens einem der Anspruche 1 bis 8 zu implementieren.

15. Computerprogrammprodukt, das in einem nicht temporären computerlesbaren Medium gespeichert ist und Programmcodeanweisungen umfasst, die durch einen Prozessor ausgeführt werden können, um die Schritte eines Verfahrens nach mindestens einem der Anspruche 1 bis 8 zu implementieren.

**Revendications**

1. Procédé de génération d'une empreinte d'un signal audio, comprenant :

la détection (S102) de pics dans une représentation d'un spectre temporel de fréquences du signal audio (S101), un pic étant défini comme un point dans la représentation qui possède une énergie supérieure à celle de ses points voisins ; et **caractérisé en ce qu'**il comprend en outre :

la génération (S103) de l'empreinte du signal audio en fonction d'une distribution des positions des pics détectés le long d'un axe de fréquence et d'une distribution des positions des pics détectés le long d'un axe temporel.

2. Procédé selon la revendication 1, dans lequel l'obtention de la représentation du spectre de fréquences dans le signal audio comprend :

la segmentation (S201) du signal audio en trames temporelles qui se chevauchent ; et
la transformation (S202) du signal audio segmenté d'un domaine temporel en un domaine de fréquence temporelle pour générer un spectrogramme du signal audio comprenant des fréquences espacées de manière linéaire.

3. Procédé selon la revendication 2, comprenant en outre :

le mappage (S203) des fréquences espacées de manière linéaire du spectrogramme en bandes P d'une échelle de fréquence de perception auditive.

4. Procédé selon la revendication 1, dans lequel la distribution des positions des pics détectés le long de l'axe de fréquence est représentée par un vecteur de nombres entiers $V_f=[V_{f1},...,V_{fF}]^T$ en fonction du nombre de pics apparaissant à chaque segment de fréquence, où un paramètre F correspond au nombre de segments de fréquence et T indique la transposition du vecteur ; et

la distribution des positions des pics détectés le long de l'axe temporel est représentée par un vecteur de nombres entiers $V_f=[V_{t1},...,V_{tN}]^T$ en fonction du nombre de pics apparaissant à chaque segment de trame temporelle, où un paramètre N correspond au nombre de segments de trame temporelle.

5. Procédé selon la revendication 4, dans lequel la fonction est une concaténation du vecteur $V_f=[V_{f1},...,V_{fF}]^T$ et du vecteur $V_t=[V_{t1},...,V_{tN}]^T$ selon l'équation ci-dessous :

$$V=[a*V_f;\ b*V_t]$$

où a et b sont des constantes.

6. Procédé selon la revendication 4, comprenant en outre l'adaptation des paramètres F et N conformément à une exigence de compacité et de robustesse de l'empreinte.

7. Procédé selon la revendication 5, comprenant en outre l'adaptation des constantes a et b conformément à une exigence de robustesse du décalage de fréquence ou du décalage d'échelle temporelle de l'empreinte.

8. Procédé selon la revendication 2, dans lequel le signal audio segmenté est transformé par une transformée de Fourier.

9. Appareil (400) de génération d'une empreinte d'un signal audio, comprenant :

une unité de représentation de la fréquence temporelle (401) pour obtenir une représentation du spectre temporel de fréquences du signal audio ;
une unité de détection de pics (402) pour détecter les pics dans la représentation du signal audio, un pic étant défini comme un point dans la représentation qui possède une énergie supérieure à celle de ses points voisins ;
et **caractérisé en ce qu'**il comprend en outre :

une première unité de calcul (403) pour obtenir une distribution des positions des pics détectés le long d'un axe de fréquence ;
une deuxième unité de calcul (404) pour obtenir une distribution des positions des pics détectés le long d'un axe temporel ; et
une unité de combinaison (405) pour combiner la distribution des positions de la première unité de calcul (403) et de la deuxième unité de calcul (404) pour générer l'empreinte du signal audio.

10. Appareil (400) selon la revendication 9, dans lequel l'unité de représentation de la fréquence temporelle (401) est adaptée pour :

segmenter le signal audio en trames temporelles qui se chevauchent ; et
transformer le signal audio segmenté d'un domaine temporel en un domaine de fréquence temporelle pour générer un spectrogramme du signal audio comprenant des fréquences espacées de manière linéaire.

11. Appareil (400) selon la revendication 10, dans lequel l'unité de représentation de la fréquence temporelle (401) est en outre adaptée pour :

mapper les fréquences espacées de manière linéaire du spectrogramme en bandes P d'une échelle de fréquence de perception auditive.

12. Appareil (400) selon la revendication 9, dans lequel la première unité de calcul (403) génère un vecteur de nombres entiers $V_f=[V_{f1},...,V_{fF}]^T$ représentant la distribution des positions des pics détectés le long de l'axe de fréquence en fonction du nombre de pics apparaissant à chaque segment de fréquence, où un paramètre F correspond au nombre de segments de fréquence et T indique la transposition du vecteur ; et
la deuxième unité de calcul (404) génère un vecteur de nombres entiers $V_f=[V_{t1},...,V_{tN}]^T$ représentant la distribution des positions des pics détectés le long de l'axe temporel en fonction du nombre de pics apparaissant à chaque segment de trame temporelle, où un paramètre N correspond au nombre de segments de trame temporelle.

13. Appareil (400) selon la revendication 12, dans lequel l'unité de combinaison (405) combine la distribution des positions par une concaténation du vecteur $V_f=[V_{f1},...,V_{fF}]^T$ et du vecteur $V_t=[V_{t1},...,V_{tN}]^T$ selon l'équation ci-dessous :

$$V=[a*V_f;\ b*V_t]$$

où a et b sont des constantes.

14. Programme informatique comprenant des instructions de code de programme exécutables par un processeur pour la mise en oeuvre des étapes d'un procédé selon au moins l'une des revendications 1 à 8.

15. Programme informatique stocké sur un support lisible sur ordinateur non transitoire comprenant des instructions de code de programme exécutables par un processeur pour la mise en oeuvre des étapes d'un procédé selon au moins l'une des revendications
1 à 8.

Obtain a representation of the temporal
spectrum of frequencies in the audio
signal

S101

Detect peaks in the representation of the
audio signal

S102

Generate a fingerprint by the combination
of the distribution of positions of the
detected peaks along the frequency axis
and that along the time axis

S103

**Fig. 1**

Segment the audio signal into frames                    S201

Transform the segmented audio signal
from time domain to time-frequency                      S202
domain to obtain a spectrogram

Map    the    linearly-spaced    frequencies
obtained from the Fourier transform into P              S203
bands auditory-motivated frequency scale

**Fig. 2**

(a) Time domain signal

(b) Spectrogram domain

(c) Considered frequency scale (e.g. log scale)

Peak detection

Number of peaks

integer vector $V_t$

(e) Time index

combination

$V=[a*V_f; b*V_t]$

histograming

Number of peaks

integer vector $V_f$

(f) Fequency index

(d) Energy peak location

**Fig. 3**

Audio signal

TIME-FREQUENCY REPRESENTING UNIT 401

PEAK DETECTING UNIT 402

FIRST CALCULATING UNIT 403

SECOND CALCULATING UNIT 404

COMBINING UNIT 405

400

Fingerprint

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005177372 A1
- US 20050811 A1
- US 2009129647 A1
- US 20090521 A1

### Non-patent literature cited in the description

- **A. WANG.** An industrial-strength audio search algorithm. *Proc. ISMIR,* 2003
- **N. Q. K DUONG ; C HOWSON ; Y LEGALLAIS.** Fast second screen TV synchronization combining audio fingerprint technique and generalized cross correlation. *IEEE International Conference in Consumer Electronics-Berlin (ICCE-Berlin),* 2012
- **PEDRO CANO et al.** a review of audio fingerprinting. *Journal of VLSI Signal Processing,* 2005, vol. 41, 271-284
- **J. HAITSMA ; T. KALKER.** A highly robust audio fingerprinting system. *Proc. ISMIR,* 2002
- **K. BEHUN.** Image features in music style recognition. *Proc. CESCG,* 2013
- **M. RILEY et al.** A text retrieval approach to content-based audio. *Proc. ISMIR,* 2008
- **S. PANCOAST ; M. AKBACAK.** Bag-of-Audio-Words Approach for Multimedia Event Classification. *Proc. Interspeech,* 2012
- **REINHARD SONNLEITNER et al.** QUAD-BASED AUDIO FINGERPRINTING ROBUST TO TIME AND FREQUENCY SCALING. *PROC. OF THE 17 TH INT. CONFERENCE ON DIGITAL AUDIO EFFECTS (DAFX-14),* 01 September 2014, 1-8
- **SIX JOREN et al.** PANAKO - A SCALABLE ACOUSTIC FINGERPRINTING SYSTEM HANDLING TIME-SCALE AND PITCH MODIFICATION. *15 TH INTERNATIONAL SOCIETY FOR MUSIC INFORMATION RETRIEVAL CONFERENCE (ISMIR 2014).,* 27 October 2014, 259-264
- **BILEI ZHU et al.** A novel audio fingerprinting method robust to time scale modification and pitch shifting. *PROCEDDINGS OF THE INTERNATIONAL CONFERENCE ON MULTIMEDIA, MM '10,* 01 January 2010, ISBN 978-1-60-558933-6, 987
- **DAN STOWELL et al.** *Birdsong and C4DM: A survey of UK birdsong and machine recognition for music researchers,* 28 July 2011, 1023